# EUROPEAN PATENT APPLICATION

(11) **EP 4 435 977 A1**
(43) Date of publication of application: **25.09.2024**
(21) Application number: 23163201.9
(22) Date of filing: 21.03.2023
(51) Int. Cl.: H01R 13/187, H01R 13/11, H01R 43/16

(54) **CROWN SPRING WITH ALTERNATING SPRING BLADE DESIGN**

(71) Applicant: TE Connectivity Nederland B.V., 5222 AR's-Hertogenbosch (NL); TE Connectivity India Private Limited, K.R. Puram Hobli, Bangalore 560066 (IN)
(72) Inventor: DENDAS, Freddy Jean Philipp, 5222 's-Hertogenbosch (NL); KAVARAMALAI, Kesavamurthy, 560066 Bangalore (IN)
(74) Representative: Grünecker Patent- und Rechtsanwälte PartG mbB

(57) **Abstract**

The invention relates to a crown spring (1) for receiving an electric pin contact (26) in an axial direction (10), comprising radially deflectable spring blades (2), each of the spring blades extending in the axial direction and comprising a proximal end (16) and a distal end (18); each of the spring blades having only one contact section (24) that is configured to contact the pin contact, being located at the radially most inwardly located portion of each of the spring blades; a proximal ring member (4), the proximal ring member extending along the circumferential direction (36) and connecting the proximal ends (16) of neighboring spring blades, the circumferential direction extending around the axial direction; and a distal ring member (6), the distal ring member extending along the circumferential direction and connecting the distal ends (18) of neighboring spring blades and wherein the contact sections of all spring blades are arranged in two annular zones (30) that extend around the axial direction and are spaced apart from each other in the axial direction and wherein the contact sections in the annular zones are located in the same radial plane (52, 54) perpendicular to the axial direction, respectively. Further, the invention concerns an electric connector (56) comprising such a crown spring. Due to the crown spring, the insertion force of a pin contact is reduced, and the contact normal force is increased. Further, the electrical connection (62) of an electric connector (2) according to the invention is improved.

## Description

The invention relates to a crown spring for receiving a pin contact in an axial direction and to an electric connector comprising such a crown spring.

Crown springs are used for example in electrical connectors for connecting a pin contact to a socket. In general, it is desired that the crown spring fixates the contact pin inside the socket and ensures a low contact resistance between at least one of the contact pin and the crown spring and the crown spring and the socket. For this purpose, the crown spring must provide a high contact normal force. The contact normal force is usually created by spring blades, which are deflected in a radial outward direction during axial insertion of the pin contact into the crown spring.

Typically, a high contact normal force is accompanied by a large insertion force that has to be overcome during insertion of the pin into the socket. The insertion force may, however, not be too high, to allow insertion of the pin into the contact in the field even under adverse condition, e.g. in an ergonomically adverse position.

It is therefore an object of the invention to provide a crown spring, which is capable of reliably holding a pin in a socket and of providing a low contact resistance, and at the same time does not require a high insertion force.

In order to solve this object, a crown spring for receiving an electric pin contact in an axial direction is provided, the crown spring comprising radially deflectable spring blades, each of the spring blades extending in the axial direction and comprising a proximal end and a distal end; each of the spring blades having only one contact section that is configured to contact the pin contact, being located at the radially most inwardly located portion of each of the spring blades; a proximal ring member, the proximal ring member extending along the circumferential direction and connecting the proximal ends of neighboring spring blades, the circumferential direction extending around the axial direction; and a distal ring member, the distal ring member extending along the circumferential direction and connecting the distal ends of neighboring spring blades, and wherein the contact sections of all spring blades are arranged in two annular zones that extend around the axial direction and are spaced apart from each other in the axial direction, and wherein the contact sections in the annular zones are located in the same radial plane perpendicular to the axial direction, respectively.

When the pin contact is inserted into the crown spring, it will first hit the contact sections arranged in a first of the two annular zones, creating a first peak of the contact insertion force. If the pin contact is further inserted into crown spring, the pin contact will hit the contact sections arranged in the second of the two annular zones, thus creating a second peak of the contact insertion force. This has the advantage that the insertion force of the pin contact is distributed over two peaks. As a result, a higher contact normal force can be achieved. This may result in lower contact resistance and higher applicable electric current ratings.

The two contact peaks also provide a haptic feedback to a user about the state of the insertion. A full insertion of the pin into the contact requires two perceptible peaks.

The above invention may be improved further by adding one or more of the features described in the following, whereby each of these features may be advantageous alone and/or be arbitrarily combined with any other feature.

For example, each of the spring blades may be configured to be elastically deflectable in a radial direction. This has the advantage that during axial insertion of the contact pin into the crown spring, the deflected spring blades produce a contact normal force for mechanically and electrically connecting the crown spring to the pin contact.

In accordance with a further aspect, the crown spring may comprise a central axis that extends in the axial direction and the contact sections of one of two annular zones are located at the same radial distance from the central axis. This again causes centering of a pin contact during axial insertion into the crown spring.

Optionally, the contact section of each of the spring blades may be located at the portion of the spring blade that is closest to the central axis.

Further, each of the two annular zones may comprise the same number of contact sections. Thus, the normal force generated by the two annular zones is at least almost equal.

The crown spring may be essentially cylindrical which is advantageous for centering the crown spring inside a socket terminal of a likewise cylindrical form. In particular, the spring blades and ring members may form a cage surrounding an essentially cylindrical volume, the cylindrical volume being configured to receive the pin contact while deflecting the spring blades in the radial outward direction. This improves centering of the pin contact inside the crown spring.

According to another embodiment, a proximal annular zone of the two annular zones may be located closer in the axial direction to the proximal ring member than a distal annular zone of the two annular zones. Further, the distance in the axial direction between the distal annular zone and the distal ring member may correspond to the distance in the axial direction between the proximal annular zone and the proximal ring member. In this context, two diameters may be considered as corresponding to each other if they do not deviate from each other by more than 20%. The crown spring according to this embodiment allows for a less error-prone assembly, as the insertion direction is irrelevant.

In one embodiment of the crown spring, the distance in the axial direction between the distal annular zone and the distal ring member may correspond to the distance in the axial direction between the distal annular zone and the proximal annular zone. This is useful in applications where the mounting direction of the crown spring is significant, e.g. during assembling with a socket terminal. Such an embodiment allows to distinguish the ends of the crown spring. In general, the crown spring does not need to be mirror-symmetric with respect to a plane that is perpendicular to a longitudinal or axial direction, or the central axis, of the crown spring.

Optionally, a crown spring may be provided, wherein, if the contact section of one of the spring blades are in one of the two annular zones, then the locations of the contact sections of the two spring blades that neighbor the one spring blade in the circumferential direction are in the other one of the two annular zones. This leads to a more even distribution of force in each along the annular zones, which in turn results in less material wear and better conductivity between the contact sections and the pin contact.

Preferably, the spring blades that comprise contact sections located in the same annular zone may be formed identically. A crown spring according to this embodiment can be produced in a cost-saving way, as a maximum of two different types of spring blades are used.

According to another aspect, a spring blade may comprise a proximal straight section that extends in a straight line from the proximal ring member to the contact section of the blade and a distal straight section that extends in a straight line from the distal ring member to the contact section.

In such an embodiment, the contact section may connect the distal to the proximal end section. The contact section itself may be bent or folded. A crown spring according to this embodiment can be manufactured in a cost-saving way, as the spring blades can be formed from a straight semi-finished product with little effort.

At least one of the proximal ring member and the distal ring member may comprise at least one recess, the at least one recess being located at an axial end of the ring member and being set back in the axial direction towards the spring blades. The axial end of a ring member is the end facing away from the spring blades. The at least one recess may extend in the circumferential direction along less than 75 % of the perimeter of the respective axial end of the ring member. The crown spring according to this embodiment has the advantage that a tool can engage with the recess, e.g. for rotating the crown spring inside a socket. This simplifies the assembly and the positioning of the crown spring. In addition, the provision of a recess removes material surpluses and burrs that may arise from the production of the crown spring. This improves the electrical and mechanical contact and facilitates handling.

Optionally, the at least one recess may extend in the circumferential direction along less than 50%, even more preferably less than 30%, and more than 20%. This allows a sufficiently large opening for a tool without endangering the structural mechanical load capacity of the crown spring.

In particular, the crown spring may comprise two recesses diametrically opposed to one another with respect to the axial direction. This improves the torque transmission of a tool engaging the recesses, especially during rotation of the crown spring.

To ensure a good electric contact between the contact section and the pin contact, the contact section may have a concave shape, the concave shape having an apex that points inward in the radial direction. Optionally, all contact sections may be located at the same radial distance from the central axis. This is advantageous for achieving an even mechanical load distribution along the circumferential direction of the pin contact, leading to less material wear and better centering during axial insertion of a pin contact into the crown spring.

The crown spring may be formed from a stamped and bent metal sheet. Thereby, the crown spring can be produced with lower costs, particularly due to an automated production.

In another embodiment, the crown spring may have an initial state and a used state, wherein the used state is obtained from the initial state after an insertion of a pin contact into the crown spring. In the used state, the crown spring may be plastically deformed as compared to the initial state.

Further, the crown spring may be configured to generate two successive peaks in the insertion force upon insertion of the pin contact in the initial state, as is described above. In the used state, the crown spring may be configured to generate a constant insertion force. In this context, the contact insertion force may be considered to be constant if it does not deviate during insertion of the pin into the crown spring by more than 20 % from the mean.

Thereby, the crown spring in its initial state can be mounted inside socket more easily. In its used state, the crown spring provides to a better electrical connection to the pin contact. The crown spring of this embodiment therefore combines good mountability and functionality.

An electric connector may comprise a crown spring according to one of the above embodiments may be provided. In particular, the electric connector may comprise a socket, into which the crown spring is inserted. Such a connector is characterized, for example, by an improved ease of use due to the reduced insertion force of the pin contact. A further advantage of the embodiment is the fact that the insertion force is distributed over to distinctive power peaks, which improves the haptic feedback of the user.

In the following, an embodiment of the invention is exemplarily described with reference to the drawings. In the drawings, the same reference numerals are used for elements that correspond to each other with respect to at least one of structure and function.

As is clear from the above general description, a feature may be omitted from the embodiment that is described below, if the technical effect of this particular feature is not needed in a particular application. Conversely, a feature may be added to the embodiment described below if, for a specific application, the technical effect of this particular feature as described above is beneficial.

In the figures,
- FIG. 1: shows a schematic perspective view of a crown spring according to a first embodiment of the invention;
- FIG. 2: shows a schematic perspective view of an electric connector according to a further embodiment of the invention comprising a crown spring; and
- FIG. 3: shows a force-distance diagram of a crown spring according to one of the embodiments of the invention.

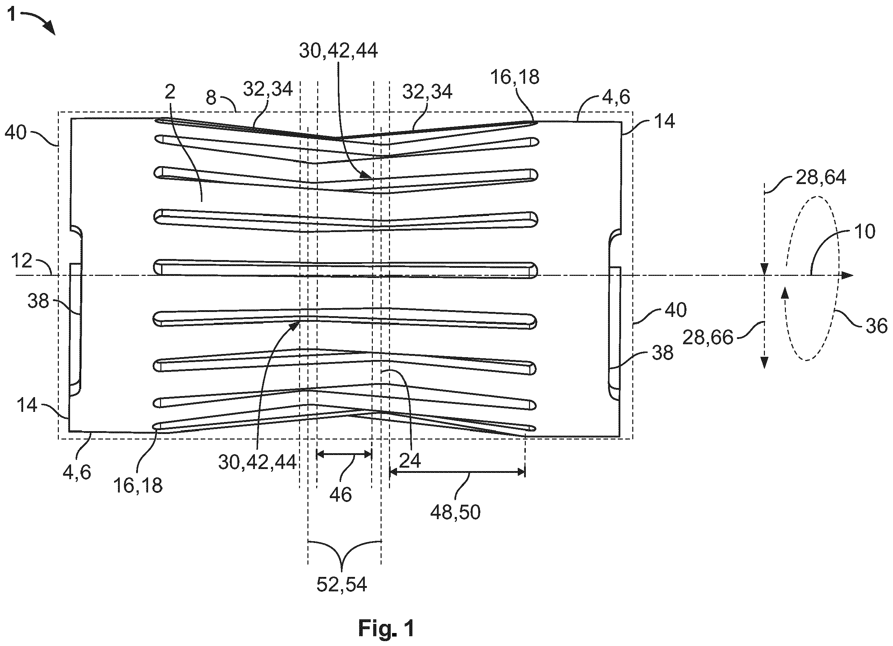

First, the structure of a crown spring 1 is described with reference to Fig. 1. As shown, the crown spring 1 comprises a plurality of radially deflectable spring blades 2, a proximal ring member 4 and a distal ring member 6.

The crown spring 1 essentially has the shape of a cylinder 8, which extends in an axial direction 10. A central axis 12 of the cylinder 8 extends along the axial direction 10. The cylinder 8 is open on its end faces 14.

Each spring blade 2 comprises a proximal end 16 and a distal end 18 and extends from the proximal ring member 4 to the distal ring member 6. The spring blades 2 may be oriented parallel to each other and to the axial direction 10.

Each of the spring blades 2 has only one contact section 24, which is configured to contact a pin contact 26 (not shown in Fig. 1). The contact section 24 is located at the radially most inward portion of each of the spring blades 2. In particular, the contact section 24 is the portion of each spring blade 2, which, in the radial direction 28, has the shortest distance to the central axis 12. The radial direction 28 extends perpendicular to the axial direction 10. Preferably, the spring blades 2 are configured to be elastically deflectable in a radial direction 28. The spring blades 2 may also be referred to as spring lamellas or spring fingers.

Preferably, those spring blades 2 are formed identically of which the contact sections 24 are located in the same annular zone 30.

Further, each spring blade 2 may comprise a proximal straight section 32 and a distal straight section 34. The proximal straight section 32 extends linearly from the proximal ring member 4 to the contact section 24 of the spring blade 2 and the distal straight section 34 extends linearly from the distal ring member 6 to the contact section 24. The proximal straight section 32 and the distal straight section 34 thus may have no curvature when undeflected in an initial state of the crown spring.

The ring members 4, 6 optionally may have the same diameter. The diameters of the ring members 4, 6 are regarded as being the same, if they do not deviate from each other by more than 20 %. Both the proximal ring member 4 and the distal ring member 6 extend in a circumferential direction 36, which extends around the axial direction 10. The proximal ring member 4 connects the proximal ends 16 of neighboring spring blades 2, the distal ring member 6 connects the distal ends 18 of neighboring spring blades 2. In particular, the ring members 4, 6 may be monolithically formed with or integrally connected to the ends of the spring blades 2, or joined via material-locking, friction-locking or form-locking.

At least one of the proximal ring member 4 and the distal ring member 6 may comprise at least one recess 38 being located at an axial end 40 of the ring member 4, 6. Both axial ends 40 face away from the spring blades 2. The at least one recess 38 is set back in the axial direction 10 towards the spring blades 2. The at least one recess 38 extends in the circumferential direction 36. In particular, the crown spring 1 may comprise two recesses 38 diametrically opposed to one another with respect to the axial direction 10.

A contact section 24 of a spring blade 2 is arranged either in a proximal annular zone 42 or in a distal annular zone 44. In particular, both the proximal annular zone 42 and the distal annular zone 44 may comprise the same amount of contact sections 24. Preferably, the contact sections 24 are located at the same radial distance from the central axis 12, wherein the central axis 12 extends in the axial direction 10.

The contact sections 24 of neighbored spring blades 2 may be arranged in two different annular zones 30. A spring blade 2, of which the contact section 24 is arranged in the proximal annular zone 42, may neighbor two spring blades 2, of which the contact sections 24 are arranged in the distal annular zone 44. Thus, the contact sections 24 of successive contact blades 24 in the circumferential direction 36 are alternatingly arranged in the proximal annular zone 42 and the distal annular zone 44.

The annular zones 30, 42, 43 extend in the circumferential direction 36. Further, the annular zones 30, 42, 44 may be spaced apart from each other in the axial direction 10 by a first axial offset 46. The second axial offset 48 between the distal annular zone 44 and the distal ring member 6 and the third axial offset 50 between the proximal annular zone 42 and the proximal ring member 4 depend on the embodiment of the invention. As regards the crown spring 1 shown in Fig. 1, the axial offsets 46, 48, 50 are identical.

The contact sections 24 that are located in the same annular zone 30, 42, 44 may be located in the same radial plane 52, 54, respectively. The radial planes 52, 54 are oriented perpendicular to the axial direction 10.

For example, the contact sections 24 that are arranged in the distal annular zone 44 may be located in a first radial plane 52 and the contact sections 24 that are arranged in the proximal annular zone 42 may be located in a second radial plane 54. The radial planes 52, 54 are parallel to each and be perpendicular to the axial direction 10.

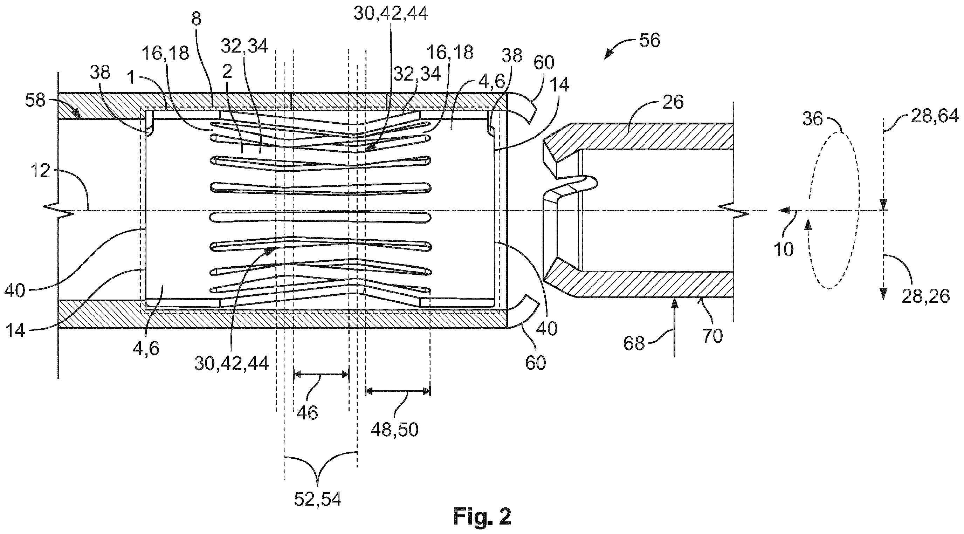

In the following, the structure and functionality of an exemplary electric connector 56 comprising the crown spring 1 of Fig. 1 is described with reference to Fig. 2. As shown, the electric connector 56 comprises a socket 58, into which the crown spring 1 is inserted. A mating connector that is to be configured to be connected to the electric connector 56 may comprise a pin contact 26.

The proximal ring member 4 and the distal ring member 6 are arranged coaxially with the socket 58. Both the proximal ring member 4 and the distal ring member 6 of the crown spring 1 may contact the socket 58.

The crown spring 1 may be locked inside the socket 58 via friction-locking. When the crown spring 1 is inserted into the socket 58 in the axial direction 10, the ring members 4, 6 are deflected by the end section 60 of the socket 58 in the radial inward direction 64. After passing the end section 60 of the socket 58, the ring members 4, 6 may expand in a radial outward direction 66. This creates a normal force between the ring members 4, 6 and the socket 58, thereby locking the crown spring 1 frictionally locked within the socket 58.

The pin contact 26 of the mating contact is inserted into the socket 58 in the axial direction 10. Specifically, the pin contact 26 is inserted in the direction of its longitudinal axis 27, which extends in the axial direction 10.

During insertion, the pin contact 26 first enters the cylinder 8 by passing an axial end 40. After passing the first of the ring members 4, 6, the pin contact 26 may come into contact with at least those of the spring blades 2 that are provided with the contact sections 24 nearest to the pin contact 26. Further insertion of the pin contact 26 will deflect these spring blades 2 in the radial outward direction 66. The radial outward direction 66 points radially away from the central axis 12 of the crown spring 1.

The exact position along the axial direction 10, where the pin contact 26 comes into contact with the spring blades 2, depends on the diameter of the pin contact 4 and the dimensioning of the crown spring 1. Next, the pin contact 26 comes into contact with the contact sections 24 that are arranged in the first of the two annular zones 30, 42, 44.

If the pin contact 26 is now inserted further, the pin contact 26 will come into contact with those spring blades 2 that feature contact sections 24 in the second of the two annular zones 30. Depending on the mounting direction of the crown spring 1, the pin contact 26 first comes into contact with the contact sections 24 that are arranged in the proximal annular zone 42, or with the contact sections 24 that are arranged in the distal annular zone 44.

When the pin contact 26 comes into contact with the contact sections 24 of the first of the two annular zones 30, 42, 44, the spring blades 2 are deflected in a radial outward direction 66. As a result, the spring blades 2 generate a contact normal force 68 directed in the radial inward direction 64. The radial inward direction 64 points radially towards the central axis 12 of the crown spring 1. The contact normal force 68 increases until the pin contact 26 has passed the contact zone 24.

The contact normal force 68 acts on the surface 70 of the pin contact 26 and creates friction between the contact sections 24 and the sheath surface 70 of the pin contact 26. The contact normal force 68 is used both to hold the pin contact 26 inside the socket 58 and to establish a proper electrical contact between the surface 70 of the pin contact 26 and the crown spring 1.

As the pin contact 26 is further inserted, it comes into contact with the contact sections 24 in the second of the two annular zones 30, 42, 44 and deflects the spring blades 2 in the radial outward direction 66. Correspondingly, these spring blades 2 generate an additional contact normal force 68. Again, the contact normal force 68-and thus the contact insertion force, which is required to push the pin contact 26 into the crown spring 1 or the socket, respectively-will increase until the pin connector has passed the second of the two annular zones 30, 42, 44.

When the pin contact 26 is fully inserted into the crown spring 1 or into the socket 58, respectively, each spring blade 2 and the contact sections 24 that are arranged in the proximal annular zone 42 and the contact sections 24 that are arranged in the distal annular zone 44 are maximally deflected in the radial outward direction 66.

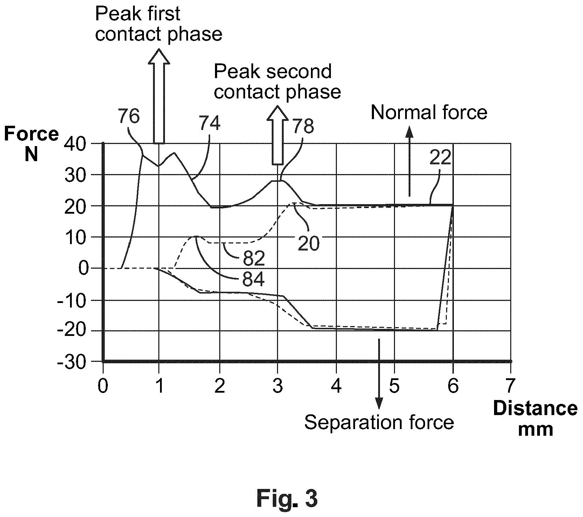

In the following, the functionality of a crown spring 1 according to another embodiment will be described with reference to Fig. 2 and 3.

Before a pin contact 26 is inserted into a crown spring 1, the crown spring 1 may be in an initial state 72. Specifically, the above description with reference to Figs. 1 and 2 may refer to the initial state 72.

Once a pin contact 26 has been inserted into the crown spring 1, the crown spring 1 may be in a used state 73. In the used state 73, the crown spring 1 is plastically deformed as compared to the initial state 72. In the used state 73, the contact normal face and the contact insertion force show a different behavior and development upon insertion of a pin contact than in the initial state 72. This is explained in the following with reference to Fig. 3.

When a pin contact 26 is inserted into a crown spring 1 in the initial state 72, the crown spring 1 generates an initial insertion resistance force 74 in an axial direction 10. The initial insertion resistance force 74 has to be overcome during insertion of the pin contact 26 into a crown spring 1.

The initial insertion resistance force 74 comprises a first initial insertion resistance force peak 76 and a second initial insertion resistance force peak 78. The first initial insertion resistance force peak 76 may be higher than the second initial insertion resistance force peak 78. The first initial insertion resistance force peak 76 is generated when the pin contact 26 gets into contact with the contact sections 24 in the first of the two annular zones 30, 42, 44. When the pin contact 26 gets into contact with the contact sections 24 in the second of the two annular zones 30, 42, 44, the second initial insertion resistance force peak 78 is generated.

When a pin contact 26 is inserted into a crown spring 1, which is in the used state 73, the crown spring 1 generates a constant insertion resistance force 82. The insertion resistance force 82 may be regarded as constant, if it does not change by more than ±20 % once the first of the two annular zones 30, 42, 44 is passed.

### Reference List

- 1: crown spring
- 2: spring blade
- 4: proximal ring member
- 6: distal ring member
- 8: cylinder
- 10: axial direction
- 12: central axis
- 14: end face
- 16: proximal end
- 18: distal end
- 20: second constant insertion resistance force
- 22: final insertion resistance force
- 24: contact section
- 26: pin contact
- 28: radial direction
- 30: annular zone
- 32: proximal straight section
- 34: distal straight section
- 36: circumferential direction
- 38: recess
- 40: axial end
- 42: proximal annular zone
- 44: distal annular zone
- 46: first axial offset
- 48: second axial offset
- 50: third axial offset
- 52: first radial plane
- 54: second radial plane
- 56: electric connector
- 58: socket
- 60: end section
- 62: electrical connection
- 64: radial inward direction
- 66: radial outward direction
- 68: contact normal force
- 70: sheath surface
- 72: initial state
- 73: used state
- 74: initial insertion resistance force
- 76: first initial insertion resistance peak
- 78: second initial insertion resistance peak
- 82: constant insertion resistance force
- 84: first constant insertion resistance force peak

## Claims

1. A crown spring (1) for receiving an electric pin contact (26) in an axial direction (10), comprising radially deflectable spring blades (2), each of the spring blades (2) extending in the axial direction (10) and comprising a proximal end (16) and a distal end (18); each of the spring blades (2) having only one contact section (24) that is configured to contact the pin contact (26), being located at the radially most inwardly located portion of each of the spring blades (2); a proximal ring member (4), the proximal ring member (4) extending along the circumferential direction (36) and connecting the proximal ends (16) of neighboring spring blades (2), the circumferential direction (36) extending around the axial direction (10); and a distal ring member (6), the distal ring member (6) extending along the circumferential direction (36) and connecting the distal ends (18) of neighboring spring blades (2) and wherein the contact sections (24) of all spring blades (2) are arranged in two annular zones (30) that extend around the axial direction (10) and are spaced apart from each other in the axial direction (10) and wherein the contact sections (24) in the annular zones (30) are located in the same radial plane (52, 54) perpendicular to the axial direction (10), respectively.

2. A crown spring (1) according to claim 1, wherein in the axial direction (10), a proximal annular zone (42) of the two annular zones (30) is located closer to the proximal ring member (20) than a distal annular zone (44) of the two annular zones (30) and wherein the distance in the axial direction (10) between the distal annular zone (44) and the distal ring member (22) corresponds to the distance in the axial direction (10) between the proximal annular zone (42) and the proximal ring member (4).

3. A crown spring (1) according to claim 1 or 2, wherein the distance in the axial direction (10) between the distal annular zone (44) and the distal ring member (22) corresponds to the distance in the axial direction (10) between the distal annular zone (44) and the proximal annular zone (42).

4. A crown spring (1) according to any one of claims 1 to 3, if the contact section (24) of one of the spring blades (2) is in one of the two annular zones (30), then the locations of the contact sections (24) of the two spring blades (2) that neighbor the one spring blade (2) in the circumferential direction (36) is in the other one of the two annular zones (30).

5. A crown spring (1) according to any one of claims 1 to 4, wherein the spring blades (2) comprising contact sections (24) that are located in the same annular zone (30) are formed identically.

6. A crown spring (1) according to any one of claims 1 to 5, wherein a spring blade (2) comprises a proximal straight section (32) that extends from the proximal ring member (4) to the contact section (24) of the spring blade (2) and a distal straight section (34) which extends from the distal ring member (6) to the contact section (24).

7. A crown spring (1) according to any one of claims 1 to 6, wherein at least one of the proximal ring member (4) and the distal ring member (6) comprises at least one recess (38), the at least one recess (38) being located at an axial end (40) of the ring member (4, 6), the axial end (40) facing away from the spring blades (2), the at least one recess (38) extending in the circumferential direction (36) along less than 75% of the perimeter of the axial end (40) of the ring member (4, 6) and the at least one recess (38) being set back in the axial direction (10) towards the spring blades (2).

8. A crown spring (1) according to any one of claims 1 to 7, wherein the crown spring (1) comprises a central axis (12) that extends in the axial direction (10) and wherein the contact sections (24) of one of two annular zones (30) are located at the same radial distance from the central axis (12).

9. A crown spring (1) according to any one of claims 1 to 8, wherein all contact sections (24) are located at the same radial distance from the central axis (12).

10. A crown spring (1) according to any one of claims 1 to 9, wherein the crown spring (1) is formed from stamped and bent metal sheet.

11. A crown spring (1) having an initial state (72) according to any one of claims 1 to 10, and a used state (73), wherein the used state (73) is obtained from the initial state (72) once a pin contact (26) has been inserted into the crown spring (1), and wherein, in the used state (73), the crown spring (1) is plastically deformed as compared to the initial state (72), and wherein, in the initial state (72), the crown spring (1) is configured to generate two successive insertion peak forces upon insertion of the pin contact (26), and, in the used state (73), configured to generate a constant insertion resistance force.

12. An electric connector (56) comprising a crown spring (1) according to any one of claims 1 to 11.
